# EUROPÄISCHE PATENTSCHRIFT

(11) **EP 3 395 204 B1**
(45) Veröffentlichungstag und Bekanntmachung des Hinweises auf die Patenterteilung: **15.07.2020**
(21) Anmeldenummer: 18169461.3
(22) Anmeldetag: 26.04.2018
(51) Int. Cl.: A47B 96/14, B65G 1/02, A47B 97/00

(54) **PERSONENSICHERUNGSVORRICHTUNG**
PERSONAL SAFETY DEVICE
DISPOSITIF DE SÉCURITÉ PERSONNEL

(30) Priorität: 28.04.2017 DE 102017207271
(43) Veröffentlichungstag der Anmeldung: 31.10.2018
(73) Patentinhaber: BITO-Lagertechnik Bittmann GmbH, 55590 Meisenheim (DE)
(72) Erfinder: KEMPERDICK, Artur, 55758 Niederwörresbach (DE)
(74) Vertreter: Richardt Patentanwälte PartG mbB

(56) Entgegenhaltungen:
- EP-A1- 2 653 408
- US-A- 3 286 282
- US-A- 5 370 202
- US-A- 5 531 167

## Beschreibung

Die Erfindung betrifft eine Personensicherungsvorrichtung für ein Regal, ein Regal mit einer Personensicherungsvorrichtung sowie ein Verfahren zur Sicherung einer Person mit einer Personensicherungsvorrichtung.

Personensicherungsvorrichtungen für Regale dienen dazu, Personen am Regal gegen Absturz zu sichern. Beispielsweise könnten Störungen im Regal auftreten, wie beispielsweise Störungen bei Kanalfahrzeugen, auch Shuttle- oder Satellitenfahrzeuge genannt, wie sie zur automatischen Bedienung von Kanallagern eingesetzt werden. Eine weitere denkbare Störung ist zum Beispiel, dass eine kartonstragende Palette im Regal stehend so beschädigt wurde, dass nun einzelne Kartons drohen, sich von der Palette zu lösen. In allen Fällen ist es notwendig, dass ein sogenannter "Störungsbeseitiger" das Regal betritt, beispielsweise unter Verwendung einer Wartungsplattform oder eines Wartungswagens.

Bei den Arbeiten zur Beseitigung der Störung müssen sich die Störungsbeseitiger dabei durch eine persönliche Schutzausrüstung gegen Absturz schützen. Zur Befestigung der persönlichen Schutzausrüstung gegen Absturz ist dabei eine stabile Anbindung an das Regal erforderlich. Gängig ist hier zum Beispiel, dass Schlingen in die Traversen des Regals eingehängt werden und sich der Störungsbeseitiger dann an diesen Schlingen sichert.

US 5 531 167 A offenbart ein Regalsystem, welches eine horizontale polygonale Grundregalanordnung und eine im Wesentlichen identische horizontale obere Regalanordnung, eine Vielzahl von vertikalen Stützpfosten und eine oder mehrere zwischen der oberen Regalanordnung und der unteren Regalanordnung angeordnete Zwischenregalanordnung umfasst. Jede Zwischenbodengruppe wird von Stützen getragen, die abnehmbar an den Stützen befestigt sind. Jede Stütze ist mit einem Verriegelungsbügel zur Befestigung des Zwischenbodens und der Stütze an den Stützpfosten versehen.

Der Erfindung liegt die Aufgabe zugrunde, ein verbessertes Regal mit einer Personensicherungsvorrichtung und ein Verfahren zur Sicherung einer Person mit einer Personensicherungsvorrichtung vorzuschlagen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Regal mit einer Personensicherungsvorrichtung angegeben, wobei die Personensicherungsvorrichtung eine Basis und zwei über die Basis gebundene Segmente aufweist, wobei durch die Segmente und die Basis eine offene erste Aussparung gebildet wird, wobei eines der Segmente eine zweite Aussparung zur formschlüssigen Aufnahme eines Sicherungselements umfasst und das andere der Segmente einen von der zweiten Aussparung wegweisenden Fuß aufweist, wobei die Segmente zur gleichzeitigen Aufnahme in einander benachbarten Lochungen einer Regalkomponente des Regals ausgebildet sind und der Fuß dazu ausgebildet ist, sich bei der Aufnahme der Segmente an der Regalkomponente abzustützen.

Die Personensicherungsvorrichtung kann für verschiedene Arten von Regalen zum Einsatz kommen, wie sie bei der Warenlagerung im Rahmen der Unternehmenslogistik Anwendung finden.

Die Personensicherungsvorrichtung kann in Lochungen von Regalkomponenten des Regals in einfacher Weise eingesetzt werden. Unter einer Regalkomponente wird dabei jegliche Komponente des Regals verstanden, welche mit dem Regal fest verbunden, beispielsweise gesteckt, verschraubt oder vernietet ist. Beispielsweise kann eine Regalkomponente eine Regalstütze, eine Traverse oder auch einen Querverbinder zwischen Regalstützen umfassen. Voraussetzung ist allerdings, dass es sich hierbei um eine tragfähige und stabile Anschlagmöglichkeit handelt, welche im Falle eines etwaigen Absturzes des Störungsbeseitigers den Sturz über die Personensicherungsvorrichtung abfangen kann.

Die Lochungen der Regalkomponenten bilden typischerweise ein Raster und ermöglichen, verschiedene Komponenten des Regals über Steck- oder Schraubverbindungen miteinander zu verbinden. Beispielsweise können Konsolen mit entsprechenden Haken in das Schlitzbild einer Stütze gesteckt werden. An den Konsolen wiederum können Fachböden, Körbe und andere Elemente angeordnet werden. Ein Regal mit entsprechenden Lochungen ist beispielsweise aus der EP 0908120 B1 bekannt.

Bei dem genannten Sicherungselement kann es sich beispielsweise um einen Sicherungshaken oder um einen Karabinerhaken handeln, welcher in die zweite Aussparung eingefädelt wird. Am zum Beispiel Karabinerhaken selbst kann wiederum der Störungsbeseitiger ein Sicherungsseil seiner persönlichen Schutzausrüstung einhängen und sich damit gegenüber einem etwaigen Absturz sichern. Konkret ist es zum Beispiel möglich, dass ein über ein Seil oder Band verbundenes Set von zwei Karabinern zum Einsatz kommt, welche einerseits mit zum Beispiel einem Sicherungsgurt, wie zum Beispiel einem Hüftgurt der zu sichernden Person verbunden wird und andererseits in die zweite Aussparung eingesetzt wird.

Die beschriebene Personensicherungsvorrichtung könnte den Vorteil haben, dass in besonders einfacher und damit komfortabler Weise die Sicherung einer Person vorgenommen werden kann: Die Personensicherungsvorrichtung muss nämlich lediglich mit dem die zweite Aussparung aufweisenden Segment in eine der Lochungen hineingesteckt werden. Vorzugsweise hält man dabei dieses Segment schräg nach unten. Lässt man nun die Personensicherungsvorrichtung los, so fällt diese z.B. selbständig schwerkraftbedingt aufgrund ihrer Form in die Lochung hinein, bleibt jedoch mit dem Fuß so an der Lochungsbegrenzung hängen, dass sie nicht aus Versehen beispielsweise in das Regal hineinfallen kann.

Ferner ist die Beabstandung der beiden Segmente voneinander so dimensioniert, dass einerseits das den Fuß aufweisende Segment in eine Lochung hineintaucht und das die zweite Aussparung aufweisende Segment aus der benachbarten Lochung wiederum herausschaut. Drückt man nun zusätzlich noch auf den herausschauenden Fuß, so wird das die zweite Aussparung aufweisende Segment automatisch aus der entsprechenden Lochung herausgedrängt. Spätestens nun ist es bequem möglich, das Sicherungselement wie beispielsweise den Karabinerhaken oder den Sicherungshaken in die zweite Aussparung einzuhängen. Sobald das Sicherungselement in die zweite Aussparung eingesetzt ist, kann sich die Personensicherungsvorrichtung nicht mehr von der Regalkomponente des Regals lösen, da einerseits eine Konterung durch den Fuß gegeben ist, eine weitere Konterung durch die Basis gegeben ist und die dritte Konterung durch das Sicherungselement gegeben ist.

Ein einfaches und schnelles Entfernen der Personensicherungsvorrichtung ist dergestalt möglich, dass zunächst das Sicherungselement entfernt wird und anschließend durch eine Schwenkbewegung des Fußes die Personensicherungsvorrichtung zunächst aus der Lochung herausgeschwenkt wird, welche das die zweite Aussparung aufweisende Element aufgenommen hatte, um dann anschließend vollständig von der anderen Lochung entfernt zu werden.

Nach einer Ausführungsform der Erfindung bilden die Basis und die Segmente eine U-Form oder C-Form. Die C-Form könnte aufgrund ihrer durchweg gebogenen Oberflächenform den Vorteil eines einfachen Ein- und Ausfädelvorgangs haben - die Gefahr einer Verkantung der Personensicherungsvorrichtung in den Lochungen ist minimiert. Die U-Form hingegen könnte den Vorteil haben, dass hierdurch die Basis plan auf der Rückseite der Regalkomponente aufliegt und somit in optimaler Weise unter Minimierung eines Montagespiels großflächig über die gesamte Basis Kräfte aufnehmen kann. Letzteres könnte insbesondere dann von Relevanz sein, wenn im Rahmen eines sehr schweren Absturzes des Störungsbeseitigers jegliche zusätzlichen Bewegungswege der Personensicherungsvorrichtung beim Auffangen des Sturzes minimiert werden sollen.

Es sei an dieser Stelle angemerkt, dass im Falle der C-Form der Mittelteil des C die Basis bildet und die Segmente durch die an die Basis angrenzenden Seitenteile des C gebildet werden.

Nach einer Ausführungsform der Erfindung ist die Personensicherungsvorrichtung so geformt, dass bei der Aufnahme der Segmente in den Lochungen das Sicherungselement in die zweite Aussparung einsetzbar ist. Wie bereits oben erwähnt könnte dies den Vorteil haben, dass die Personensicherungsvorrichtung durch das Sicherungselement gekontert wird, sodass dadurch die Personensicherungsvorrichtung fest mit der Regalkomponente des Regals verbunden ist.

Es sei allgemein angemerkt, dass unter dem Begriff "benachbarte Lochungen" nicht zwingend eine unmittelbare Benachbarung der Lochungen gemeint ist. Grundsätzlich müssen die Lochungen entlang einer geraden Linie gesehen angeordnet sein, sodass es durchaus auch möglich ist, das Sicherungselement größer zu dimensionieren, so dass sich zwischen den Lochungen, welche die beiden Segmente aufnehmen, durchaus auch noch eine weitere ungenutzte Lochungen befinden können.

Nach einer Ausführungsform der Erfindung ist der Fuß ausgebildet, sich mit einer Auflagefläche an der Regalkomponente abzustützen, wobei sich die Auflagefläche von der zweiten Aussparung wegweisend erstreckt. Durch das Vorsehen einer Auflagefläche und nicht nur etwa eines spitzen Auflagepunkts oder einer spitzen Auflagekante könnte gewährleistet sein, dass wesentlich höhere Kräfte auf die Regalkomponente im Falle eines Absturzes des Störungsbeseitigers übertragen werden können, ohne dass dies zum Beispiel zu einer Beschädigung der Regalkomponente oder gar der Personensicherungsvorrichtung führt. Durch die flächige Kraftübertragung wird die Kraft pro Quadratzentimeter reduziert, also insgesamt die einwirkende Kraft gleichmäßiger verteilt.

Nach einer Ausführungsform der Erfindung erstreckt sich die Auflagefläche auf Höhe der zweiten Aussparung. Dies könnte den Vorteil haben, dass die Personensicherungsvorrichtung durch den Fuß und das Sicherungselement sehr dicht an die Regalkomponente angeschlagen ist, sodass auch hierdurch ein mögliches Spiel der Personensicherungsvorrichtung beim Absturz des Störungsbeseitigers minimiert wird.

Nach einer Ausführungsform der Erfindung erstreckt sich die Basis parallel zur Auflagefläche. Auch dies könnte zu einer optimalen Verteilung der von der Personensicherungsvorrichtung auf die Regalkomponente wirkenden Kräfte führen, wobei das mögliche Spiel der Personensicherungsvorrichtung in der Regalkomponente minimiert werden kann.

Nach einer Ausführungsform der Erfindung sind die Segmente senkrecht zur Basis angeordnet.

Nach einer Ausführungsform der Erfindung handelt es sich bei dem Sicherungselement um einen Karabinerhaken.

Nach einer Ausführungsform der Erfindung gehen jedes der Segmente und die Basis an ihrer der ersten Aussparung abgewandten Außenseiten über eine erste Rundung ineinander über. Das Vorhandensein der Rundung könnte den Vorteil haben, dass der Vorgang des "Einfädelns" der Personensicherungsvorrichtung in die Lochungen dergestalt vereinfacht wird, dass ein versehentliches Verkanten der Personensicherungsvorrichtung in den Lochungen verhindert oder das diesbezügliche Risiko minimiert wird.

Zum Beispiel beträgt der Kurvenradius der ersten Rundung mindestens das 0,3-fache des Abstandes der beiden Segmente, vorzugsweise mindestens das 0,5-fache des Abstandes der beiden Segmente.

In ähnlicher Weise weist nach einer Ausführungsform der Erfindung das die zweite Aussparung aufweisende Segment auf seiner der ersten Aussparung und der Basis abgewandten Außenseite eine zweite Rundung auf. Der Kurvenradius der zweiten Rundung beträgt zum Beispiel mindestens das 0,15-fache des Abstandes der beiden Segmente, vorzugsweise mindestens das 0,3-fache des Abstandes der beiden Segmente.

Nach einer Ausführungsform der Erfindung weist die zweite Aussparung eine Langlochform auf. Die Hauptachse des Langlochs steht dabei senkrecht auf der Basis. Das Vorsehen der Langlochform könnte den Vorteil haben, dass die Personensicherungsvorrichtung für verschiedene Regaltypen zum Einsatz kommen kann, bei welchen das Raster der Lochungen und auch die Materialstärken der Regalkomponenten variieren können. In jedem Fall steht immer ausreichend Platz zur Verfügung, mit welchem zumindest ein Teil des Langlochs aus der Lochung der Regalkomponente herausragen kann, sodass bequem das Sicherungselement in die Lochung eingesetzt werden kann.

Erfindungsgemäß ist die Personensicherungsvorrichtung dazu ausgebildet,
- wenn das die zweite Aussparung aufweisende Segment in eine der Lochungen eingesetzt wurde und
- wenn die Personensicherungsvorrichtung mit ihrem, auf Seite der ersten Aussparung befindlichen Übergang zwischen der Basis und dem den Fuß tragenden Segment auf einer Kante der Lochung aufliegt,

dass die Personensicherungsvorrichtung selbständig schwerkraftbedingt mit ihrem die zweite Aussparung aufweisenden Segment in die benachbarte Lochung hineinschwenkt.

Dies könnte den Vorteil einer einfachen Einsetzbarkeit und damit Verwendbarkeit der Personensicherungsvorrichtung haben. Es sei angemerkt, dass der "Übergang" zwischen der Basis und dem den Fuß tragenden Segment typischerweise durch eine Linie der Außenseite der Personensicherungsvorrichtung definiert wird. Bilden Basis und Segment z.B. eine rechtwinklige U-Form, so ist die Linie durch die "Falzlinie" zwischen Basis und Segment gegeben.

In einem weiteren Aspekt betrifft die Erfindung ein Verfahren zur Sicherung einer Person mit einer Personensicherungsvorrichtung an einem Regal, wobei die Personensicherungsvorrichtung eine Basis und zwei über die Basis verbundene Segmente aufweist, wobei durch die Segmente um die Basis eine offene erste Aussparung gebildet wird, wobei eines der Segmente eine zweite Aussparung zur formschlüssigen Aufnahme eines Sicherungselements umfasst, das andere der Segmente einen von der zweiten Aussparung wegweisenden Fuß aufweist und die Segmente zur gleichzeitigen Aufnahme in einer der benachbarten Lochungen einer Regalkomponente des Regals ausgebildet sind. Der Fuß ist ferner dazu ausgebildet, sich bei der Aufnahme der Segmente an der Regalkomponente abzustützen, wobei das Verfahren umfasst:
- Einsetzen der Segmente in die Lochungen der Regalkomponente,
- Einsetzen des Sicherungselements in die zweite Aussparung,
- Befestigen einer Schutzausrüstung der Person an dem Sicherungselement.

Die obig beschriebenen Ausführungsformen können in beliebiger Weise miteinander kombiniert werden, solange sich die Kombinationen nicht gegenseitig ausschließen.

Im Folgenden werden bevorzugte Ausführungsformen der Erfindung anhand der Zeichnungen näher erläutert. Es zeigen:
- Figur 1: eine schematische Ansicht einer Personensicherungsvorrichtung,
- Figuren 2a bis e: verschiedene Schritte zur Sicherung einer Person mit einer Personensicherungsvorrichtung,
- Figur 3: eine alternative Variante einer Personensicherungsvorrichtung.

Im Folgenden werden einander ähnliche Elemente mit den gleichen Bezugszeichen gekennzeichnet.

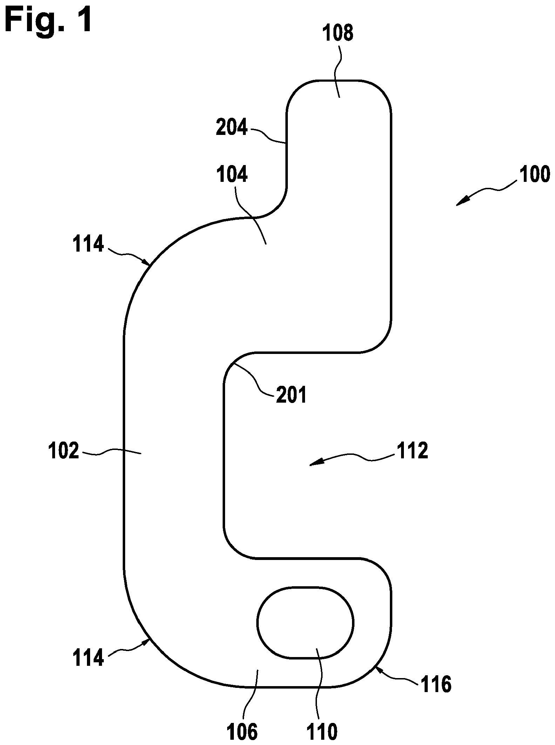

Die Figur 1 zeigt eine schematische Ansicht einer Personensicherungsvorrichtung 100, wobei die Personensicherungsvorrichtung 100 eine Basis 102 und zwei über die Basis 102 verbundene Segmente 104 und 106 aufweist. Durch die Basis 102 und die Segmente 104 und 106 wird eine offene erste Aussparung 112 gebildet. In dem Beispiel der Figur 1 bilden Basis 102 sowie die Segmente 104 und 106 eine U-Form.

Das Segment 106 weist eine Aussparung 110 auf. In Richtung parallel zur Basis 102 gesehen befindet sich von der Aussparung 110 wegweisend und der Aussparung 110 gegenüberliegend am Segment 104 ein Fuß 108.

Die Aussparung 110 hat eine Langlochform, wobei die Hauptachse des Langlochs senkrecht auf der Basis 102 steht.

Die Segmente 104 und 106 gehen in die Basis durch eine Rundung 114 über. Ferner weist das Segment 106 eine Rundung 116 auf. Diese besagten Rundungen 114 und 116 befinden sich jeweils auf der Außenseite der Personensicherungsvorrichtung, das heißt auf jener Seite, welche der ersten Aussparung 112 abgewandt ist. Die Rundung 116 befindet sich dabei auf jener Außenseite des Segments 106, welche dem Fuß 108 abgewandt ist.

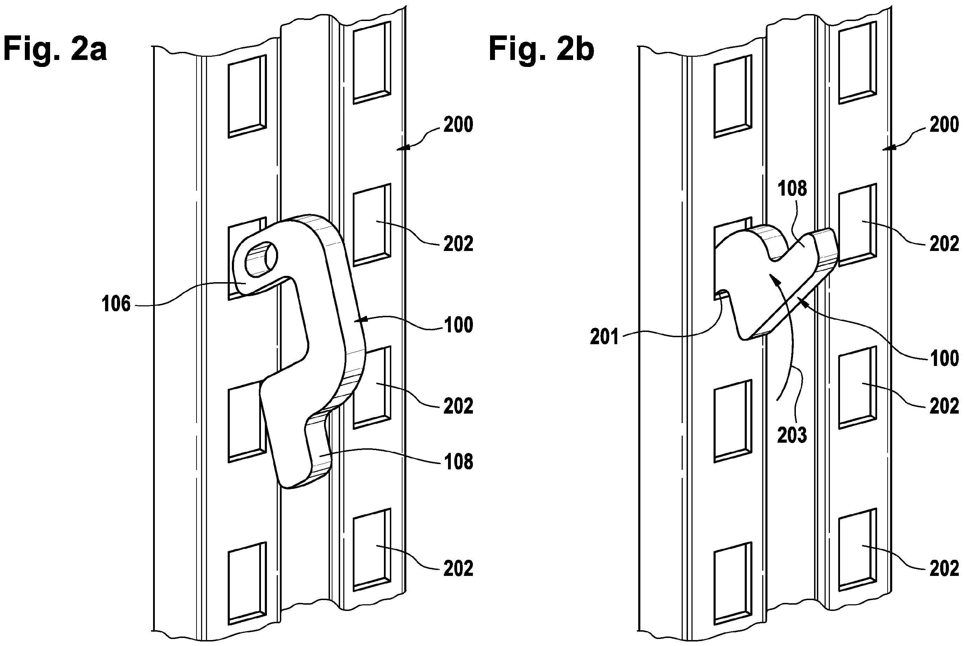

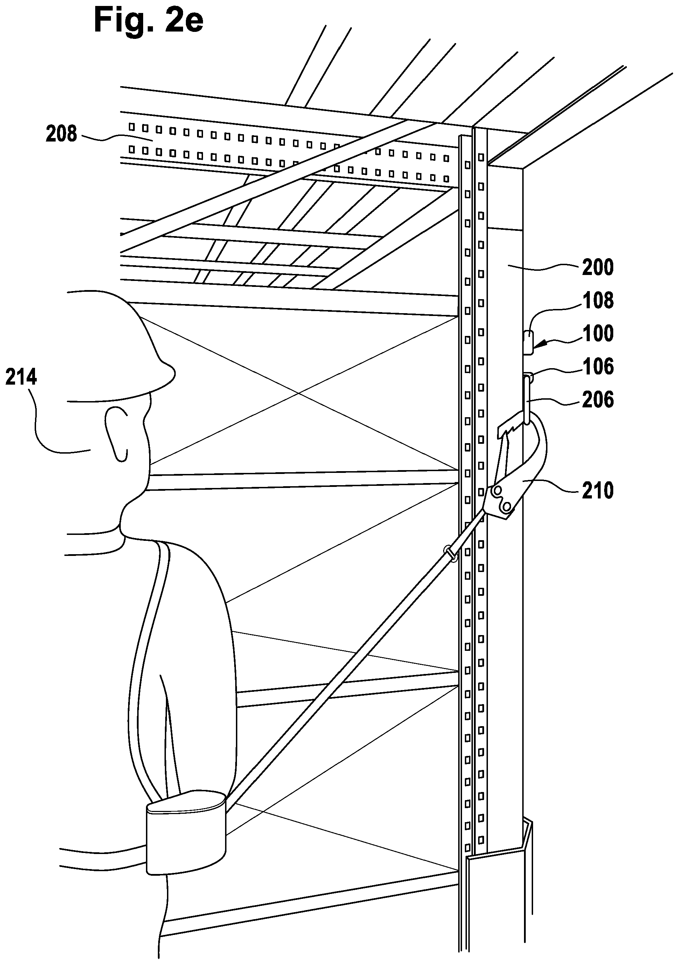

Eine beispielhafte Verwendung der Personensicherungsvorrichtung 100 ist in den nachfolgenden Figuren 2a bis e exemplarisch gezeigt. Ausgangspunkt ist das Vorhandensein eines Regals, welches über Regalstützen 200 auf dem Boden steht. Die Regalstützen 200 bilden dabei die senkrechte Verstrebung des Regals, wohingegen in Figur 2e ersichtliche Traversen 208 parallel zum Boden verlaufen und zum Beispiel Stückgut aufnehmen können.

Im Folgenden sei ohne Beschränkung der Allgemeinheit davon ausgegangen, dass die Personensicherungsvorrichtung 100 an einer der Regalstützen 200 befestigt werden soll. Die Regalstützen 200 weisen ein Raster von Lochungen 202 auf. Diese dienen eigentlich der Befestigung von Konsolen oder beliebigen weiteren Regalkomponenten und sind in jedem Regal vorhanden. Muss nun eine Störung im Regal beseitigt werden, muss sich ein entsprechender Störungsbeseitiger, wie in der Figur 2e gezeigt, über ein entsprechendes Sicherungsset am Regal gegen Absturz sichern. Hierzu kommt nun die Personensicherungsvorrichtung 100 wie folgt zum Einsatz:
Zunächst wird die Personensicherungsvorrichtung 100 in eine der Lochungen mit dem die zweite Aussparung aufweisenden Segment 106 voranweisend eingesetzt. Dies ist in der Figur 2a gezeigt. Beim Einsetzen wird dabei die Personensicherungsvorrichtung am Fuß 108 festgehalten.

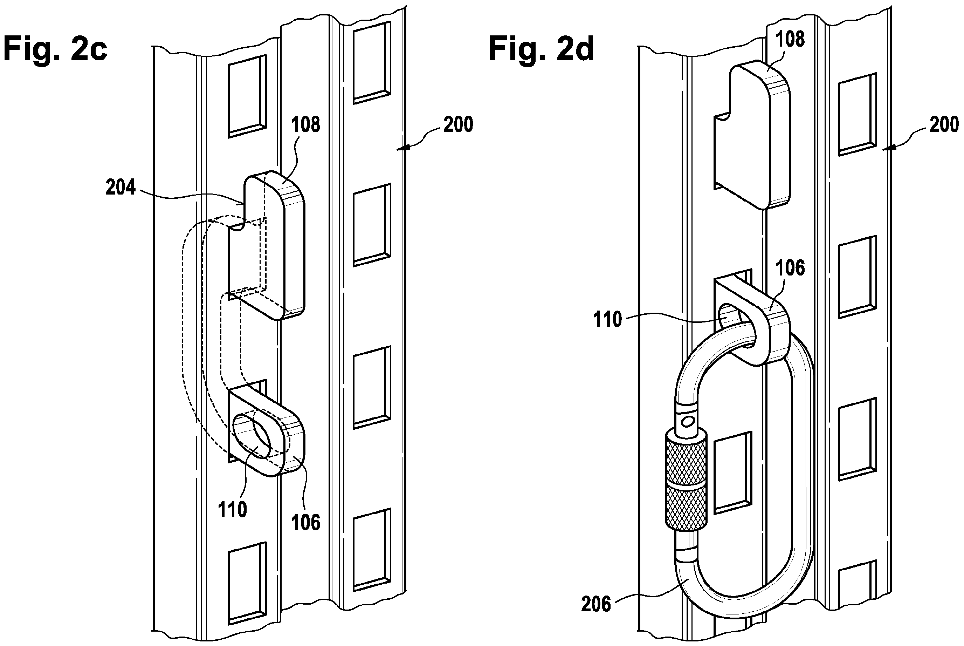

Sobald das Segment 106 in die Lochung 202 eingesetzt ist, kann durch eine weitere Kippbewegung 203 die Personensicherungsvorrichtung in der Regalkomponente dergestalt verdreht werden, dass wie in der Figur 2c gezeigt das Segment 106 mit der zweiten Aussparung 110 wieder aus einer benachbarten Lochung weiter unten heraustaucht. Dieser Kippvorgang ist in Figur 2b) illustriert und in Richtung 203 gegeben. Der Kippvorgang kann dabei entweder schwerkraftbedingt selbständig durch die Personensicherungsvorrichtung erfolgen oder aber die Person, welche die Personensicherungsvorrichtung verwendet, kann den Fuß 108 in Richtung 203 gegen die Regalstütze 200 drücken.

Z.B. könnte die Personensicherungsvorrichtung 100 so ausgebildet sein, dass im in Figur 2b gezeigten Zustand der Kippvorgang schwerkraftbedingt erfolgt. In der Figur 2b liegt dabei die Personensicherungsvorrichtung mit ihrem linienförmigen Übergang 201 zwischen Basis 102 und Schenkel 104 von oben auf einer Kante der Aussparung 202 auf.

Es sei angemerkt, dass es bei der Verwendung der Personensicherungsvorrichtung zu keinem Zeitpunkt möglich sein sollte, dass die Personensicherungsvorrichtung beispielsweise durch die obere Lochung 202 hindurch in das Regal hineinfällt, sodass eine bedienungsfreundliche und bedienungssichere Verwendbarkeit gewährleistet ist.

Nachdem nun also die Personensicherungsvorrichtung über die Kippbewegung Richtung 203 in der Regalkomponente aufgenommen ist und der in Figur 2c gezeigte Zustand eingenommen ist, liegt der Fuß 108 mit einer planen Auflagefläche 204 an der Außenseite der Regalstütze 200 an. Die Auflagefläche 204 erstreckt sich, wie in der Schnittansicht der Figur 1 deutlich erkennbar, parallel zur Basis 102 zumindest teilweise auf Höhe der Aussparung 110.

Im letzten Schritt kann daraufhin, wie in der Figur 2d gezeigt, mittels eines Karabinerhakens 206 die Personensicherungsvorrichtung an der Regalstütze 200 gesichert werden. Hierzu wird der Karabinerhaken durch die zweite Aussparung 110 hindurchgeführt und verriegelt.

In den Karabinerhaken 206 wiederum kann ein Sicherungsset einer persönlichen Schutzausrüstung, wie beispielsweise ein Sicherungshaken 210, wie in der Figur 2e gezeigt, eingehängt werden. Der Störungsbeseitiger 214 ist damit gegen einen Absturz sicher gesichert.

Wird der Karabinerhaken in Richtung senkrecht zur Haupterstreckungsrichtung der Regalstütze weggezogen, so wird der Fuß 108 mit seiner Fläche 204 an die Regalstütze 200 gepresst und die Personensicherungsvorrichtung verharrt fest an der Regalstütze. Wird der Karabinerhaken z.B. aufgrund eines Absturzes senkrecht nach unten, parallel zur Regalstütze, gezogen, so sorgen die auf den waagerechten Kanten der Aussparungen aufliegenden Schenkel dafür, dass die Personensicherungsvorrichtung fest an der Regalstütze verharrt. Jegliche Zugrichtung am Karabinerhaken zwischen diesen zwei beschriebenen Extremen führt zu einer Kombination von Anpressen des Fußes an die Regalstütze und Abstützen der Schenkel durch die Kanten der Aussparungen.

Will nun der Störungsbeseitiger 214 die Sicherung aufheben, das heißt die Personensicherungsvorrichtung entfernen, so geschieht dies einfach dadurch, indem der Karabinerhaken 206 von der zweiten Aussparung entfernt wird und durch eine Kippbewegung entgegen der Richtung 203 nach unten der Fuß verdreht wird. Dies führt dazu, dass die Personensicherungsvorrichtung aus den Lochungen der Regalstütze 200 ausgefädelt wird.

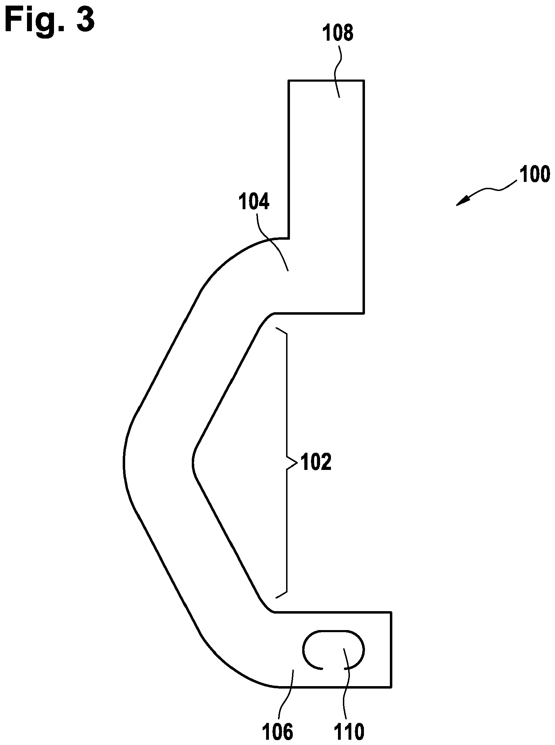

Während sich die vorangegangenen Figuren mit einer U-förmigen Personensicherungsvorrichtung beschäftigt haben, zeigt die Figur 3 eine C-förmige Personensicherungsvorrichtung für ein Regal. Die beiden Segmente 104 und 106 sowie die Basis 102 bilden dabei die C-Form, wobei die restlichen Komponenten der Personensicherungsvorrichtung identisch mit der in Figur 1 gezeigten Personensicherungsvorrichtung sind. Auch in diesem Fall ist gewährleistet, dass sich die Personensicherungsvorrichtung selbständig in die Endlage bewegen kann, in welcher das Sicherungselement in der zweiten Aussparung formschlüssig insbesondere gegen eine Bewegung in Richtung senkrecht zur Basis und parallel zur Basis verhindert wird. Auch in diesem Fall wird durch den Fuß 108 verhindert, dass die Personensicherungsvorrichtung in die Regalstütze hineinfällt, sodass insgesamt die Personensicherungsvorrichtung in der gewünschten Lage gesichert bereitgestellt werden kann.

### Bezugszeichenliste

- 100: Personensicherungsvorrichtung
- 102: Basis
- 104: Segment
- 106: Segment
- 108: Fuß
- 110: Aussparung
- 112: Aussparung
- 114: Rundung
- 116: Rundung
- 200: Regalstütze
- 201: Übergang
- 202: Lochung
- 203: Bewegungsrichtung
- 204: Auflagefläche
- 206: Karabinerhaken
- 208: Traverse
- 210: Sicherungshaken
- 214: Störungsbeseitiger

## Patentansprüche

1. Regal mit einer Personensicherungsvorrichtung (100), wobei die Personensicherungsvorrichtung (100) eine Basis (102) und zwei über die Basis (102) verbundene Segmente (104; 106) aufweist, wobei durch die Segmente (104; 106) und die Basis (102) eine offene erste Aussparung (112) gebildet wird, wobei eines der Segmente (104; 106) eine zweite Aussparung (110) zur formschlüssigen Aufnahme eines Sicherungselements (206) umfasst und das andere der Segmente (104; 106) einen von der zweiten Aussparung (110) wegweisenden Fuß (108) aufweist, wobei die Segmente (104; 106) zur gleichzeitigen Aufnahme in einander benachbarten Lochungen (202) einer Regalkomponente (200) des Regals ausgebildet sind und der Fuß (108) dazu ausgebildet ist, sich bei der Aufnahme der Segmente (104; 106) an der Regalkomponente (200) abzustützen, wobei die Personensicherungsvorrichtung (100) so geformt ist, dass bei der Aufnahme der Segmente (104; 106) das Sicherungselement (206) in die zweite Aussparung (110) einsetzbar ist, **dadurch gekennzeichnet, dass** die Personensicherungsvorrichtung (100) dazu ausgebildet ist,
- wenn das die zweite Aussparung aufweisende Segment in eine der Lochungen eingesetzt wurde und
- wenn die Personensicherungsvorrichtung mit ihrem, auf Seite der ersten Aussparung befindlichen Übergang zwischen der Basis und dem den Fuß tragenden Segment auf einer Kante der Lochung aufliegt
dass die Personensicherungsvorrichtung selbständig schwerkraftbedingt mit ihrem die zweite Aussparung aufweisenden Segment in die benachbarte Lochung hineinschwenkt.

2. Regal nach Anspruch 1, wobei die Basis (102) und die Segmente eine U-Form oder C-Form bilden.

3. Regal nach einem der vorigen Ansprüche, wobei der Fuß (108) ausgebildet ist, sich mit einer Auflagefläche (204) an der Regalkomponente (200) abzustützen, wobei sich die Auflagefläche (204) von der zweiten Aussparung (110) wegweisend erstreckt.

4. Regal nach Anspruch 3, wobei sich die Auflagefläche (204) auf Höhe der zweiten Aussparung (110) erstreckt.

5. Regal nach einem der vorigen Ansprüche 3-4, wobei sich die Basis (102) parallel zur Auflagefläche (204) erstreckt.

6. Regal nach einem der vorigen Ansprüche, wobei jedes der Segmente (104; 106) und die Basis (102) an ihren der ersten Aussparung abgewandten Außenseiten über eine erste Rundung (114) ineinander übergehen.

7. Regal) nach Anspruch 6, wobei der Kurvenradius der ersten Rundung (114) mindestens das 0,3-fache des Abstandes der beiden Segmente beträgt.

8. Regal nach einem der vorigen Ansprüche, wobei das die zweite Aussparung (110) aufweisende Segment (106) auf seiner der ersten Aussparung (112) und der Basis (102) abgewandten Außenseite eine zweite Rundung (116) aufweist.

9. Regal nach Anspruch 8, wobei der Kurvenradius der zweiten Rundung (116) mindestens das 0,15-fache des Abstandes der beiden Segmente (104; 106) beträgt.

10. Regal nach einem der vorigen Ansprüche, wobei die zweite Aussparung (110) eine Langlochform hat.

11. Regal nach Anspruch 1, wobei es sich bei der Regalkomponente (200) um eine Regalstütze handelt.

12. Verfahren zur Sicherung einer Person mit einer Personensicherungsvorrichtung (100) an einem Regal, wobei die Personensicherungsvorrichtung (100) eine Basis (102) und zwei über die Basis (102) verbundene Segmente (104; 106) aufweist, wobei durch die Segmente (104; 106) und die Basis (102) eine offene erste Aussparung (112) gebildet wird, wobei eines der Segmente (104; 106) eine zweite Aussparung (110) zur formschlüssigen Aufnahme eines Sicherungselements (206) umfasst und das andere der Segmente (104; 106) einen von der zweiten Aussparung (110) wegweisenden Fuß (108) aufweist, wobei die Segmente zur gleichzeitigen Aufnahme in einander benachbarten Lochungen (202) einer Regalkomponente (200) des Regals ausgebildet sind und der Fuß (108) dazu ausgebildet ist, sich bei der Aufnahme der Segmente an der Regalkomponente (200) abzustützen, wobei das Verfahren umfasst:
- Einsetzen der Segmente (104; 106) in die Lochungen (202) der Regalkomponente (200),
- Einsetzen des Sicherungselements (206) in die zweite Aussparung (110),
- Befestigen einer Schutzausrüstung der Person an dem Sicherungselement (206),
wobei
- wenn das die zweite Aussparung aufweisende Segment in eine der Lochungen eingesetzt wurde und
- wenn die Personensicherungsvorrichtung mit ihrem, auf Seite der ersten Aussparung befindlichen Übergang zwischen der Basis und dem den Fuß tragenden Segment auf einer Kante der Lochung aufliegt dass die Personensicherungsvorrichtung selbständig schwerkraftbedingt mit ihrem die zweite Aussparung aufweisenden Segment in die benachbarte Lochung hineinschwenkt.

## Claims

1. A shelf comprising a personal safety device (100), the personal safety device (100) comprising a base (102) and two segments (104; 106) connected via the base (102), an open first recess (112) being formed by the segments (104; 106) and the base (102), one of the segments (104; 106) including a second recess (110) for receiving a securing element (206) in a form-locked manner, and the other of the segments (104; 106) including a foot (108) pointing away from the second recess (110), the segments (104; 106) being designed to be simultaneously received in mutually adjoining perforations (202) of a shelf component (200) of the shelf, and the foot (108) being designed to be supported on the shelf component (200) when the segments (104; 106) are received, the personal safety device (100) being formed in such a way that, when the segments (104; 106) are received, the securing element (206) can be inserted into the second recess (110), **characterized in that** the personal safety device (100) is designed such that,
- when the segment including the second recess has been inserted into one of the perforations, and
- when the personal safety device with the transition thereof, located on the side of the first recess, between the base and the segment carrying the foot rests on an edge of the perforation,
the personal safety device automatically pivots, as a result of gravity, with the segment thereof including the second recess into the adjoining perforation.

2. The shelf according to claim 1, wherein the base (102) and the segments form a U shape or a C shape.

3. A shelf according to any one of the preceding claims, wherein the foot (108) is designed to be supported with a bearing surface (204) thereof on the shelf component (200), the bearing surface (204) extending so as to point away from the second recess (110).

4. The shelf according to claim 3, wherein the bearing surface (204) extends at the level of the second recess (110).

5. A shelf according to any one of claims 3 to 4, wherein the base (102) extends parallel to the bearing surface (204).

6. A shelf according to any one of the preceding claims, wherein each of the segments (104; 106) and the base (102), at the outer sides thereof which face away from the first recess, transition into one another by way of a first rounded region (114).

7. The shelf according to claim 6, wherein the curve radius of the first rounded region (114) is at least 0.3 times the distance between the two segments.

8. A shelf according to any one of the preceding claims, wherein the segment (106) including the second recess (110), on the outer side thereof facing away from the first recess (112) and the base (102), includes a second rounded region (116).

9. The shelf according to claim 8, wherein the curve radius of the second rounded region (116) is at least 0.15 times the distance between the two segments (104; 106).

10. A shelf according to any one of the preceding claims, wherein the second recess (110) has the shape of an elongated hole.

11. The shelf according to claim 1, wherein the shelf component (200) is a shelf support.

12. A method for securing a person by way of a a personal safety device (100) on a shelf, the personal safety device (100) comprising a base (102) and two segments (104; 106) connected via the base (102), an open first recess (112) being formed by the segments (104; 106) and the base (102), one of the segments (104; 106) including a second recess (110) for receiving a securing element (206) in a form-locked manner, and the other of the segments (104; 106) including a foot (108) pointing away from the second recess (110), the segments being designed to be simultaneously received in mutually adjoining perforations (202) of a shelf component (200) of the shelf, and the foot (108) being designed to be supported on the shelf component (200) when the segments are received, the method comprising:
- inserting the segments (104; 106) in the perforations (202) of the shelf component (200);
- inserting the securing element (206) into the second recess (110); and
- attaching protective gear of the person to the securing element (206),
wherein
- when the segment including the second recess has been inserted into one of the perforations, and
- when the personal safety device with the transition thereof, located on the side of the first recess, between the base and the segment carrying the foot rests on an edge of the perforation, the personal safety device automatically pivots, as a result of gravity, with the segment thereof including the second recess into the adjoining perforations.

## Revendications

1. Etagère dotée d'un dispositif de protection de personne (100), où le dispositif de protection de personne (100) présente une base (102) et deux segments (104 ; 106) reliés par le biais de la base (102), où une première cavité (112) ouverte est formée par les segments (104 ; 106) et la base (102), où un des segments (104 ; 106) comprend une deuxième cavité (110) permettant la réception par complémentarité des formes d'un élément de protection (206) et l'autre des segments (104 ; 106) présente un pied (108) opposé à la deuxième cavité (110), où les segments (104 ; 106) sont conçus pour la réception simultanée dans des trous (202) voisins l'un de l'autre d'un composant d'étagère (200) de l'étagère et le pied (108) est conçu pour s'appuyer sur le composant d'étagère (200) lors de la réception des segments (104 ; 106), où le dispositif de protection de personne (100) est formé de telle manière que, lors de la réception des segments (104 ; 106), l'élément de protection (206) peut être inséré dans la deuxième cavité (110), **caractérisée en ce que** le dispositif de protection de personne (100) est conçu pour
- lorsque le segment présentant la deuxième cavité a été inséré dans un des trous et
- lorsque le dispositif de protection de personne repose sur une arête du trou avec sa partie de transition se trouvant sur le côté de la première cavité entre la base et le segment portant le pied,
que le dispositif de protection de personne aille pivoter avec son segment présentant la deuxième cavité dans le trou voisin de manière autonome du fait de la gravité.

2. Etagère selon la revendication 1, dans laquelle la base (102) et les segments constituent une forme en U ou une forme en C.

3. Etagère selon l'une des revendications précédentes, dans laquelle le pied (108) est conçu pour s'appuyer sur le composant d'étagère (00) avec une surface d'appui (204), où la surface d'appui (204) s'étend en s'éloignant de la deuxième cavité (110).

4. Etagère selon la revendication 3, dans laquelle la surface d'appui (204) s'étend à la hauteur de la deuxième cavité (110).

5. Etagère selon l'une des revendications précédentes 3 ou 4, dans laquelle la base (102) s'étend parallèle par rapport à la surface d'appui (204).

6. Etagère selon l'une des revendications précédentes, dans laquelle chacun des segments (104 ; 106) et la base (102) se mettent en prise les uns dans les autres au niveau de leurs côtés extérieurs opposés à la première cavité par le biais d'un premier arrondi (114).

7. Etagère selon la revendication 6, dans laquelle le rayon de courbure du premier arrondi (114) est égal à au moins 0,3 fois la distance entre les deux segments.

8. Etagère selon l'une des revendications précédentes, dans laquelle le segment (106) présentant la deuxième cavité (110) présente un deuxième arrondi (116) sur son côté extérieur opposé à la première cavité (112) et à la base (102).

9. Etagère selon la revendication 8, dans laquelle le rayon de courbure du deuxième arrondi (116) est égal à au moins 0,15 fois la distance entre les deux segments (104 ; 106).

10. Etagère selon l'une des revendications précédentes, dans laquelle la deuxième cavité (110) a la forme d'un trou oblong.

11. Etagère selon la revendication 1, dans laquelle, dans le cas du composant d'étagère (200), il s'agit d'un support d'étagère.

12. Procédé de sécurisation d'une personne avec
un dispositif de protection de personne (100) sur une étagère, où le dispositif de protection de personne (100) présente une base (102) et deux segments (104 ; 106) reliés par la base (102), où une première cavité (112) ouverte est formée par les segments (104 ; 106) et la base (102), où un des segments (104 ; 106) comprend une deuxième cavité (110) permettant la réception par complémentarité des formes d'un élément de protection (206) et l'autre des segments (104 ; 106) présente un pied (108) opposé à la deuxième cavité (110), où les segments (104 ; 106) sont conçus pour la réception simultanée dans des trous (202) voisins l'un de l'autre d'un composant d'étagère (200) de l'étagère et le pied (108) est conçu pour s'appuyer sur le composant d'étagère (200) lors de la réception des segments (104 ; 106), où le procédé comprend :
- l'insertion des segments (104 ; 106) dans les trous (202) du composant d'étagère (200),
- l'insertion de l'élément de protection (206) dans la deuxième cavité (110),
- la fixation d'un équipement de protection de la personne sur l'élément de protection (206),
où,
- lorsque le segment présentant la deuxième cavité a été inséré dans un des trous et
- lorsque le dispositif de protection de personne repose sur une arête du trou avec sa partie de transition se trouvant sur le côté de la première cavité entre la base et le segment portant le pied, le dispositif de protection de personne va pivoter dans le trou voisin de manière autonome du fait de la gravité avec son segment présentant la deuxième cavité.
